Europäisches Patentamt

European Patent Office

Office européen des brevets

(11) Publication number: **0 426 036 A2**

# EUROPEAN PATENT APPLICATION

(21) Application number: 90120600.3

(22) Date of filing: 26.10.90

(51) Int. Cl.⁵: **G06K 15/12**

(30) Priority: 31.10.89 JP 283747/89

(43) Date of publication of application:
**08.05.91 Bulletin 91/19**

(84) Designated Contracting States:
**DE FR GB**

(71) Applicant: **Kabushiki Kaisha Toshiba**
**72, Horikawa-cho Saiwai-ku**
**Kawasaki-shi(JP)**

(72) Inventor: **Matsuoka, Takashi, c/o Intell.**
**Property Div.**
**K.K. Toshiba,71-1 Shibaura 1-chome,**
**Minato-ku**
**Tokyo 105(JP)**

(74) Representative: **Henkel, Feiler, Hänzel &**
**Partner**
**Möhlstrasse 37**
**W-8000 München 80(DE)**

(54) **Data processing apparatus with improved power control.**

(57) An image forming apparatus of the invention receives image data from a host apparatus (58) and performs an image forming operation. The image forming apparatus includes an image forming portion (80) for image formation, a power supply portion (81) for supplying power to the image forming portion, an input portion (9) for designating power interruption to the power supply portion (8), and a control portion (50) for interrupting supply of power to the image forming portion (80) when power interruption is designated by the input portion (9). When the image forming apparatus is not used for a long period of time, supply of power to the image forming portion (80) can be interrupted using the input portion (9), so that wasteful power consumption is prevented.

FIG. 3

FIG. 8

EP 0 426 036 A2

## DATA PROCESSING WITH IMPROVED POWER CONTROL

The present invention relates to an image forming apparatus such as a laser printer for forming an image in accordance with image data supplied from, e.g., a host apparatus and, more particularly, to an improvement in power control of an image forming apparatus, i.e., ON/OFF control of power to an image forming means.

In general, in a laser printer, an image forming circuit keeps receiving power and hence is always set in an ON state even after reception of image data from a host apparatus is completed and a printing operation based on this image data is completed. For this reason, even if reception of image data from the host apparatus is not performed for a long period of time, the power is kept consumed. Especially, the power consumption for thermal fixing is undesirably large.

As described above, a drawback of a conventional laser printer is that a large amount of power is consumed even if a printing operation is completed and no image data is received from a host apparatus.

It is, therefore, an object of the present invention to provide an image forming apparatus which can reduce the power consumption in accordance with a request from a user.

In order to achieve the above object, according to the present invention, there is provided an image forming apparatus for receiving image data from a host apparatus and performing an image forming operation, comprising image forming means for forming an image, power supply means for supplying power to the image forming means, input means for designating power interruption to the power supply means, and control means for causing the power supply means to interrupt supply of power to the image forming means when power interruption is designated by the input means.

According to the present invention, since power to the image forming means can be interrupted by the input means when the apparatus is not used for a long period of time, wasteful power consumption can be prevented.

This invention can be more fully understood from the following detailed description when taken in conjunction with the accompanying drawings, in which:

Figs. 1 to 8 show an embodiment of the present invention in which:

Figs. 1A to 1C are flow charts for explaining an operation of the embodiment;

Fig. 2 is a view showing a data transfer sequence;

Fig. 3 is a block diagram showing an arrangement of a main part of an electrical circuit;

Fig. 4 is a block diagram showing an arrangement of a connecting circuit;

Fig. 5 is a schematic longitudinal sectional view of a laser printer apparatus as an image forming apparatus;

Fig. 6 is a plan view showing an arrangement of an operation panel;

Fig. 7 is a view showing a connecting state of IC cards to a board on which a control circuit is mounted; and

Fig. 8 is a block diagram showing an arrangement of a printer circuit.

An embodiment of the present invention will be described below with reference to the accompanying drawings.

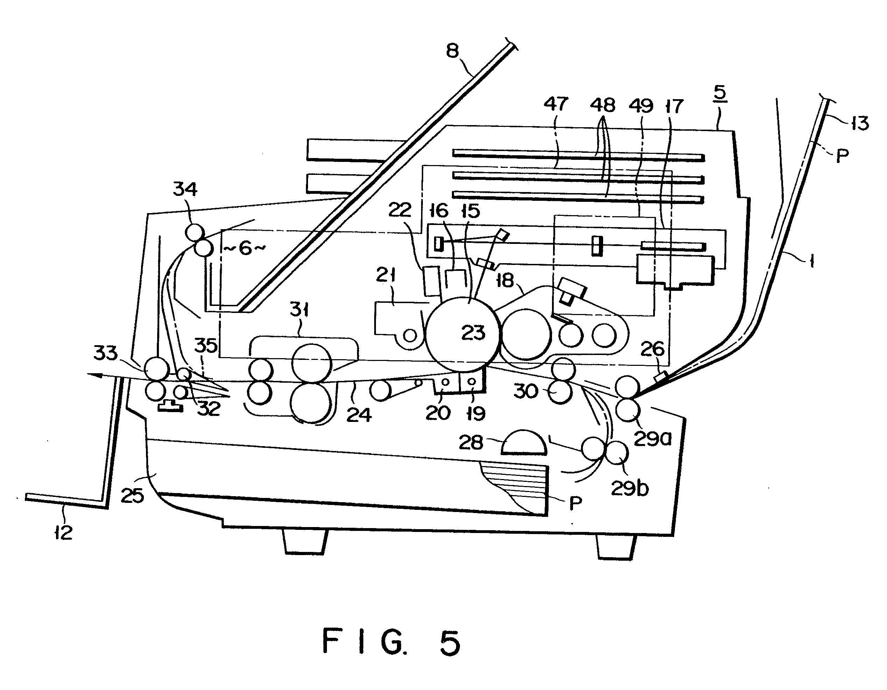

Fig. 5 shows a laser printer as an image forming apparatus of the present invention.

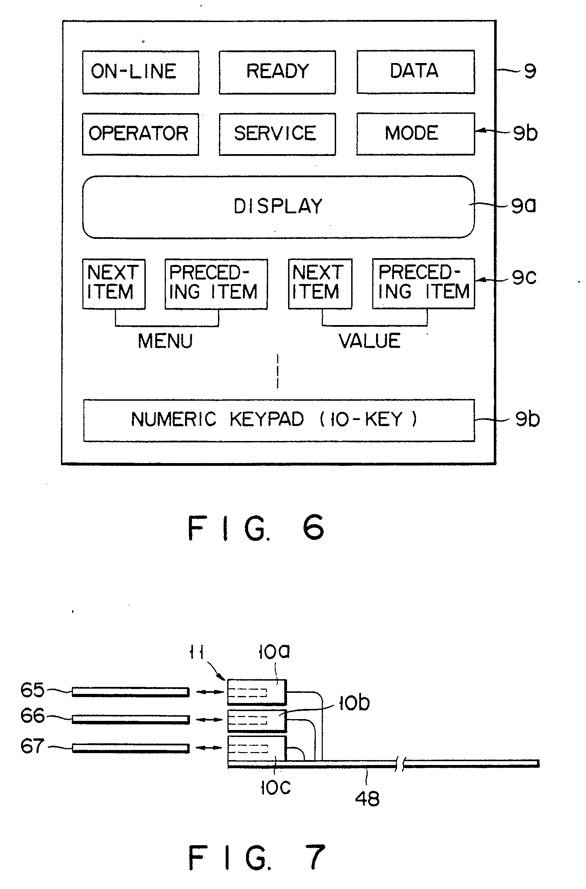

Laser printer 1 has the following arrangement. Referring to Figs. 5 and 6, reference numeral 5 denotes a printer main body of laser printer 1. A rear portion of the upper surface of printer main body 5 is raised by one step. Recess portion 6 as a paper discharge portion is formed in a central portion of the upper surface of printer main body 5. Paper discharge tray 8 movably supported by a jogger is mounted in recess portion 6. In addition, an operation panel and three IC card slots are respectively arranged on the right and left sides of recess portion 6.

As shown in Fig. 6, the operation panel comprises LCD (liquid crystal display) unit 9a for displaying the number of copies, a mode, a guidance message, and the like, LED display unit (display means) 9b for displaying various states with flickering of light by means of an LED, and switch 9c for designating various operations. LED display unit 9b is constituted by the following displays: an "on-line" display for indicating whether LED display unit 9b is connected to an external unit, i.e., an on-line/off-line mode; a "ready" display for indicating that the printer is in an operative state; a "data" display for indicating that image data is being transmitted; an "operator" display for requesting a call for an operator; a "service" display for requesting a call for a serviceman; and a "mode" display for indicating an automatic/manual mode.

Switch 9c is constituted by, e.g., menu keys and value keys, 10-key pad 9d, or the like. The menu keys comprises two keys, i.e., "next item" and "preceding item" keys. Every time the "next item" key is depressed, a plurality of menu information displayed on the left half of LCD unit 9a are incremented by one item. Every time the "preceding item" is depressed the display is decremented by one item. In this manner, such display operations are cyclically repeated. Similarly, the value keys comprise two keys, i.e., "next item" and "preceding item" keys. Every time the "next item" key is depressed, a plurality of value information corresponding to menu information displayed on the left half of LCD unit 9a are incremented by one item. Every time the "preceding item" key is depressed, the display is decremented by item. In this manner, such display operations are cyclically repeated.

An operator selects and designates a desired operation by operating the menu and value keys. In addition, value information can be input through 10-key pad 9d. That is, 10-key pad 9d is used for power interruption input and power resumption input, and for setting the number of copies and the like.

Discharge tray 12 and manual insertion tray 13 are respectively arranged on the front and rear surfaces of printer main body 5. Paper sensor 26 is arranged on a bottom portion of manual insertion tray 13. Upon detection of insertion of paper P in manual insertion tray 13, paper sensor 26 informs it to CPU 50 (to be described later).

Drum-like photosensitive member 15 as an image carrier is arranged at substantially the center of printer main body 5, as shown in Fig. 5. The following components are sequentially arranged around photosensitive member 15: charger 16, laser optical system 17, developing unit 18, transfer unit 19, separating unit 20, cleaning unit 21, and discharger 22.

Recording medium convey path 24 is formed in printer main body 5 so as to extend to the front surface of the printer through image transfer portion 23 formed between photosensitive member 15 and transfer unit 19. Convey path 24 is designed to guide paper P to image transfer section 23. The paper P is either automatically fed from paper feed cassette 25 stored in a bottom portion of printer main body 5 through pickup roller 28 and convey rollers 29b or manually fed from manual insertion tray 13 through convey rollers 29a.

Aligning roller pair 30 is arranged on the upstream side of image transfer portion 23 on recording medium convey path 24. On the downstream side, paper discharge selector 32 and discharge roller pair 33 are arranged.

Branch convey path 35 having discharge roller pair 34 is formed on the terminal end side of recording medium convey path 24 so as to guide paper P selected by paper discharge selector 32 to recess portion 6 as a paper discharge portion.

Referring to Fig. 5, reference numerals 47 and 49 denote boards on which printer circuits for controlling operations of the printer itself are mounted; and 48, a board on which a printer control circuit for controlling operations of printer circuits 47 and 49 is mounted to constitute a printer control portion.

As shown in Fig. 7, three connectors 10a, 10b, and 10c are attached to an end portion of the board constituting printer control portion 48. IC card slots 11 are respectively formed in these connectors to allow IC cards 65, 66, and 67 to be inserted therein. In this manner, connectors 10a, 10b, and 10c are directly attached to the board constituting printer control portion 48 and are respectively designed to allow insertion of IC cards 65, 66, and 67 therein. With this arrangement, long signal lines need not be arranged with harnesses. Since the length of each signal line can be shortened, a delay on each line is reduced, and crosstalk is also reduced. Therefore, IC cards 65 to 67 can be accessed at high speed.

An image forming operation is performed as follows. Photosensitive member 15 is rotated and is uniformly charged by charger 16. Exposure corresponding to an image signal is performed onto photosensitive member 15 by laser optical system 17 so as to form an electrostatic latent image. Subsequently, the electrostatic latent image on photosensitive member 15 is developed by developing unit 18 using a two-component developer consisting of a toner and a carrier and is supplied as a developed image to image transfer portion 23.

Meanwhile, paper P picked up from paper feed cassette 25 in synchronism with this developed image forming operation, or manually inserted paper P is supplied to image transfer portion 23 through aligning roller pair 30. The developed image formed on photosensitive member 15 is then transferred onto paper P by transfer unit 19. Thereafter, paper P is separated from photosensitive member 15 by separating unit 20 and is conveyed to fixing unit 31 through recording medium convey path 24. After the developed image is fixed on paper P by fusion, the discharge direction of paper P is selected by paper discharge selector 32, and paper P is discharged to paper discharge tray 8 on the upper portion or to paper discharge tray 12 on the front portion.

Note that after the developed image is transferred onto paper P, the residual toner on photosensitive member 15 is removed by cleaning unit 21 to allow the next copying operation.

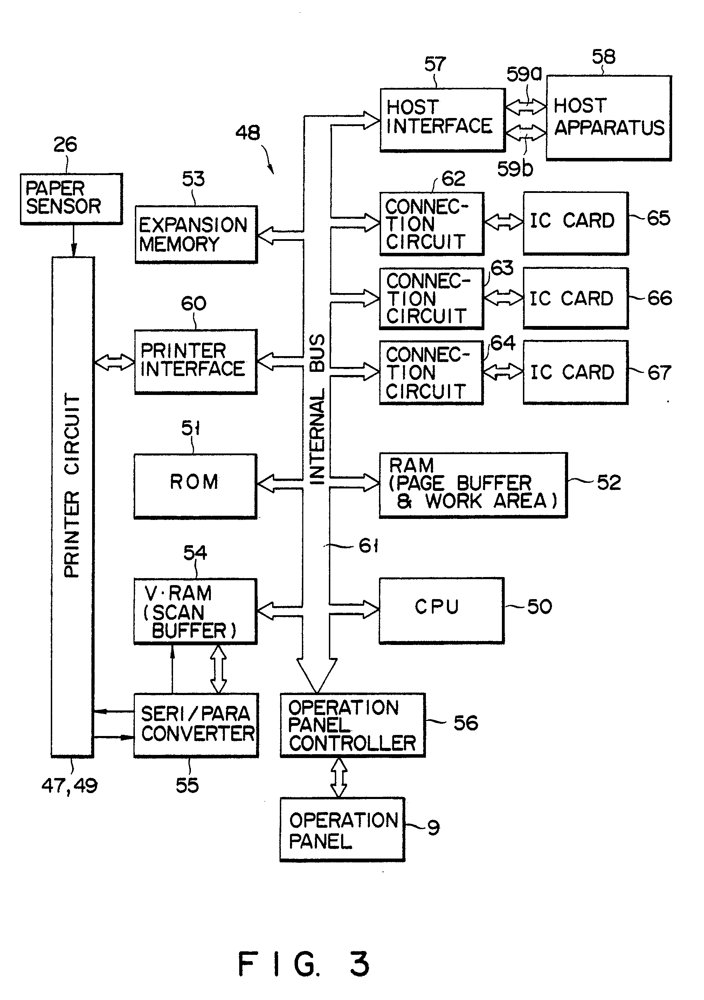

Fig. 3 shows a main part of an electrical circuit of printer control portion 48. Referring to Fig. 3, a determination means and a control means for determining that image data is being received by CPU 50 control the overall image forming apparatus.

ROM 51 stores a control program. CPU 50 is operated in accordance with this program. In addition, ROM 51 stores ID numbers to be collated when data is updated, data associated with paper P, e.g., a top margin, a left margin, and a paper type, and the like.

RAM 52 is used as a page buffer for temporarily storing image data transmitted from host apparatus 58 or as a working buffer of CPU 50.

Expansion memory 53 is a large-capacity memory used when RAM 52 cannot store one-page data, e.g., when a large amount of image data, such as bit map data, is supplied from host apparatus 58.

Video RAM 54 serves to store image data developed as a bit image. An output from video RAM 54 is supplied to serial/parallel converter 55.

Serial/parallel converter 55 converts the image data, which is developed as a bit image by video RAM 54 and is supplied as parallel data, into serial data and outputs it to printer circuits 47 and 49.

Host interface 57 serves to perform data communication between host apparatus 58 constituted by, e.g., a computer or an image reader, and printer control portion 48. Host interface 57 has two types of transmission lines, i.e., serial transmission line 59a and parallel transmission line 59b. These lines can be selectively used in accordance with a type of data to be transmitted between host apparatus 58 and printer control portion 48. Printer interface 60 interfaces control signal lines between printer control portion 48 and printer circuits 47 and 49. A detection signal from paper sensor 26 described above is also supplied to CPU 50 through this printer interface 60.

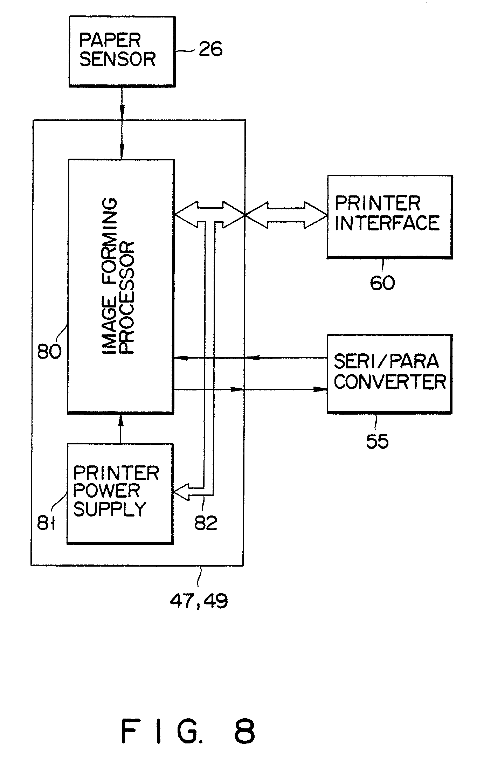

Each of printer circuits 47 and 49 has an arrangement shown in Fig. 8. Communication of signals between printer interface 60 and serial/parallel converter 55 is performed through image forming processor (image forming means) 80. Image forming processor 80 performs a driving/controlling operation of the apparatus which is required for an image forming operation. Printer power supply (power supply means) 81 supplies power to image forming processor 80. Printer power supply 81 is ON/OFF-controlled by signal 82 and outputs its state as signal 82. Since signal 82 is connected to CPU 50 through printer interface 60 and internal bus 61, CPU 50 can turn on or off the output of printer power supply 81 through printer interface 60 and can detect a state of printer power supply 81.

Connecting circuits 62 to 64 (to be described in detail later) serve to control supply/interruption of power to IC cards 65 to 67 upon insertion or extraction thereof.

Operation panel controller 56 performs various control operations, e.g., control for displaying a guidance message on LCD unit 9a of operation panel 9, control for ON/OFF and flickering operations of LED display unit 9b, and control for transmitting data input from switch 9c to CPU 50.

In this case, guidance messages of an input for designating power interruption and of an input for designating power resumption are displayed on LCD unit 9a so as to be selected and input by using switch 9c.

Internal bus 61 serves to perform communication of information among CPU 50, ROM 51, RAM 52, expansion memory 53, video RAM 54, operation panel controller 56, host interface 57, printer interface 60, and connecting circuits 62 to 64.

IC card memories 65 to 67 are constituted by nonvolatile memories such as static RAMs with backup batteries, E²PROMs, or EPROMs, or mask ROMs. IC cards 65 to 67 are differently colored depending on the types of memories and the functions of stored contents. For example, an IC card of a mask ROM type on which fonts are recorded is colored blue, and an IC card of a static RAM type on which emulation data is recorded is colored orange. Therefore, the types of memories and types of written data of IC cards 65 to 67 can be instantly identified.

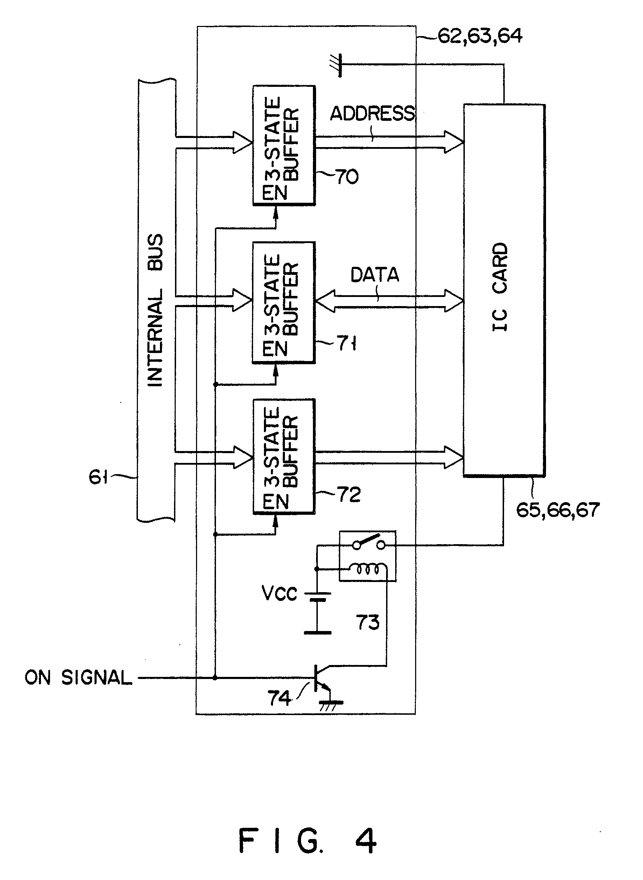

Each of connecting circuits 62 to 64 has an arrangement shown in Fig. 4. When IC cards 65 to 67 are to be inserted or extracted in or from connectors 10a to 10C, respectively, connecting circuits 62 to 64 disconnect the power supply and the signal lines from IC cards 65 to 67 to protect data stored in IC cards 65 to 67 from destruction caused by noise generated upon insertion/extraction of these cards.

More specifically, each of connecting circuits 62 to 64 comprises: 3-state buffer 70 for disconnecting an address signal line extending from internal bus 61; 3-state buffer 71 for disconnecting a data signal line; 3-state buffer 72 for disconnecting a control signal line; power supply Vcc for supplying power to IC cards 65 to 67; relay 73 for connecting/disconnecting the output of the power supply Vcc; and transistor 74 for driving relay 73.

When IC cards 65 to 67 are inserted or extracted, the output of each transistor 74 is disconnected by turning off a PS ON signal supplied from CPU 50. As a result, the contact of relay 73 is opened to disconnect the power supply from a corresponding one of IC cards 65 to 67. In addition, signals supplied to the enable (EN) terminals of 3-state buffers 70 to 72 are turned off to set the output terminals of 3-state buffers 70 to 72 in high-impedance states. As a result, connecting circuits 62 to 64 are electrically disconnected from IC cards 65 to 67.

In such a state, IC cards 65 to 67 are inserted or extracted in or from connectors 10a to 10C.

When power is to be supplied to IC cards 65 to 67, IC cards 65 to 67 are inserted in connectors 10a to 10C in the above-mentioned electrically disconnected state. The PS ON signal from CPU 50 is then turned on to turn on transistor 74. With this operation, the contact of relay 73 is closed, and supply of power to IC cards 65 to 67 is started. In addition, signals supplied to the enable (EN) terminals of 3-state buffers 70 to 72 are turned on. As a result, data supplied to the input terminals of 3-state buffers 70 to 72 are directly output from their output terminals, and hence connecting circuits 62 to 64 are electrically connected to IC cards 65 to 67. With this operation, data can be read or written from or in IC cards 65 to 67.

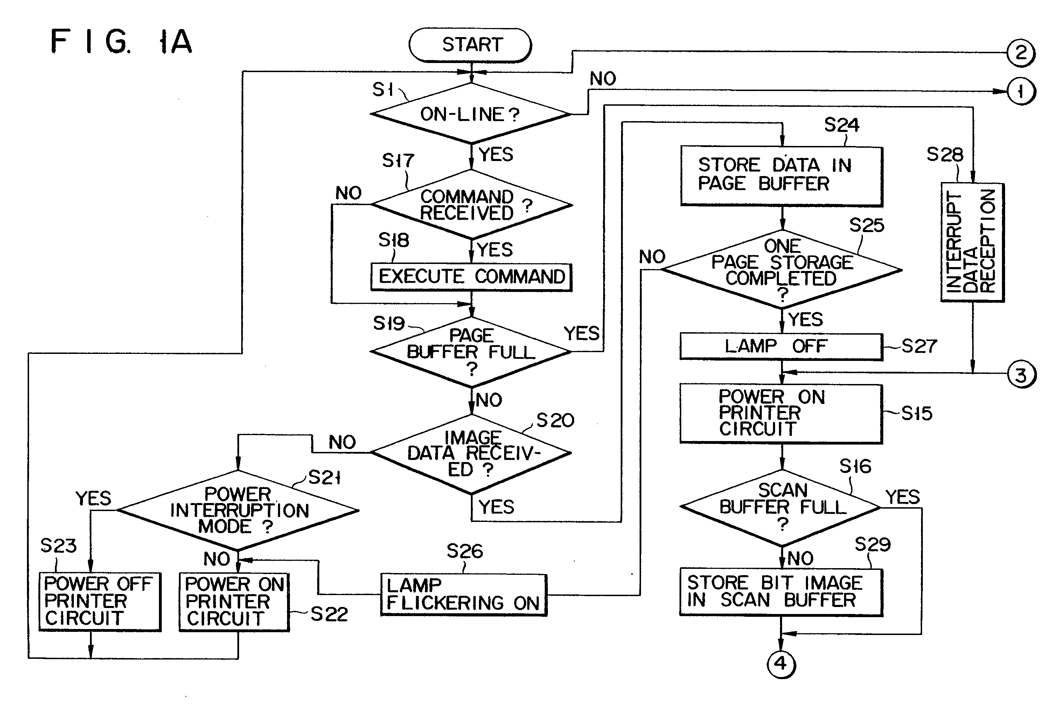

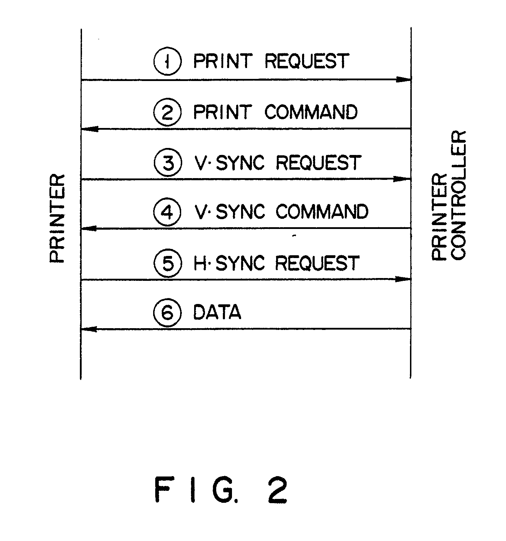

An image forming operation in the above-described arrangement will be described below with reference to flow charts shown in Figs. 1A to 1C and to a data transfer sequence shown in Fig. 2. In this case, image formation is performed by receiving image data from host apparatus 58, developing it into bit map data, and supplying it to the printer.

A data transfer sequence between printer circuits 47 and 49 incorporated in the printer and printer control portion 48 will be described first.

Fig. 2 shows the data transfer sequence.

① When the printer is set to be ready for printing, a print request for requesting a printing operation is output from the printer.

② In response to the print request, printer control portion 48 outputs a print command to the printer, provided that preparation of image data to be printed is completed.

③ Upon reception of the print command, the printer outputs a VSYNC request for requesting synchronization in the vertical direction, i.e., the convey direction of paper P.

④ In response to the VSYNC request, printer control portion 48 outputs a VSYNC command to the printer. The VSYNC command is used to provide a timing at which laser optical system 17 starts to form an electrostatic latent image on photosensitive member 15. The VSYNC command is output when paper P fed from paper feed cassette 25 or manual insertion tray 13 is conveyed along recording medium convey path 24 and reaches a predetermined position. The predetermined position is the position of paper P on recording medium convey path 24 at which the time required for paper P to be further conveyed to reach image transfer portion 23 coincides with the time required for an electrostatic latent image formed on photosensitive member 15 to be developed by developing unit 18 upon rotation and to reach image transfer portion 23.

⑤ Upon reception of the VSYNC command, the printer outputs an HSYNC request to printer control portion 48 after initial positioning of laser optical system 15 in the horizontal direction, i.e., in a direction perpendicular to the convey direction of paper P.

⑥ In response to the HSYNC request, printer control portion 48 transmits image data developed into a bit image to the printer. When transmission of one-page image data is completed, a series of processing operations is completed.

A large number of images can be formed by repeatedly executing the data transfer sequence. Note that the respective control signals such as the print request, the print command, the VSYNC request, the VSYNC command, and the HSYNC request are transmitted/received between printer circuits 47 and 49 and CPU 50 through printer interface 60.

An operation of printer control portion 48 using the data transfer sequence will be described in detail below with reference to flow charts in Figs. 1A to 1C.

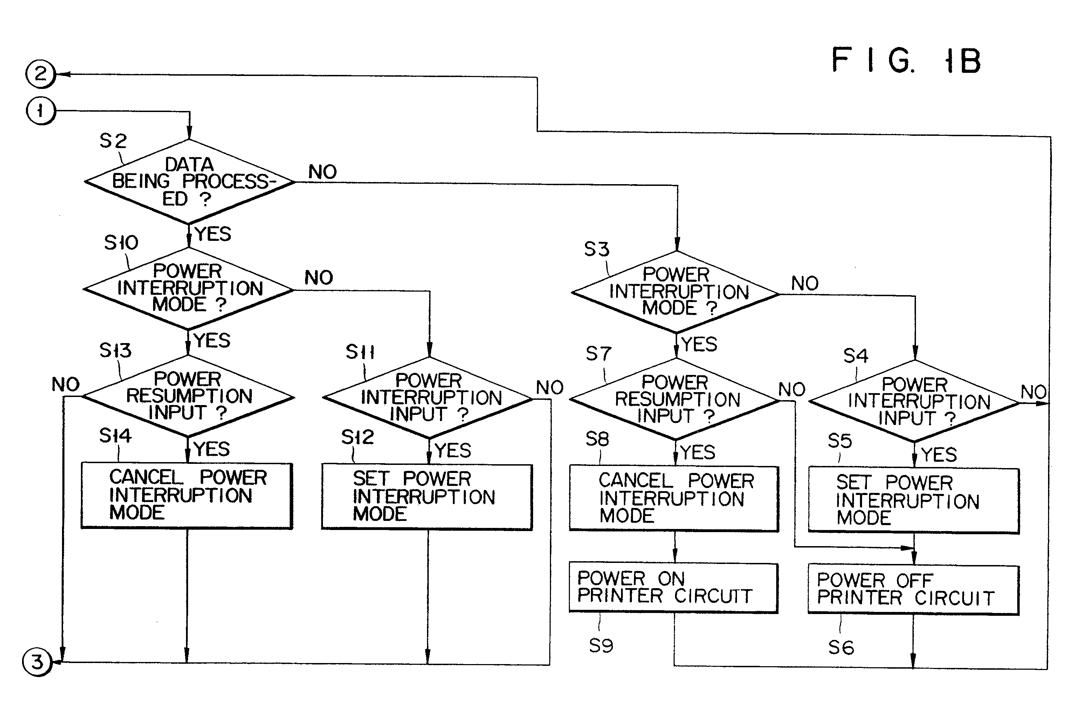

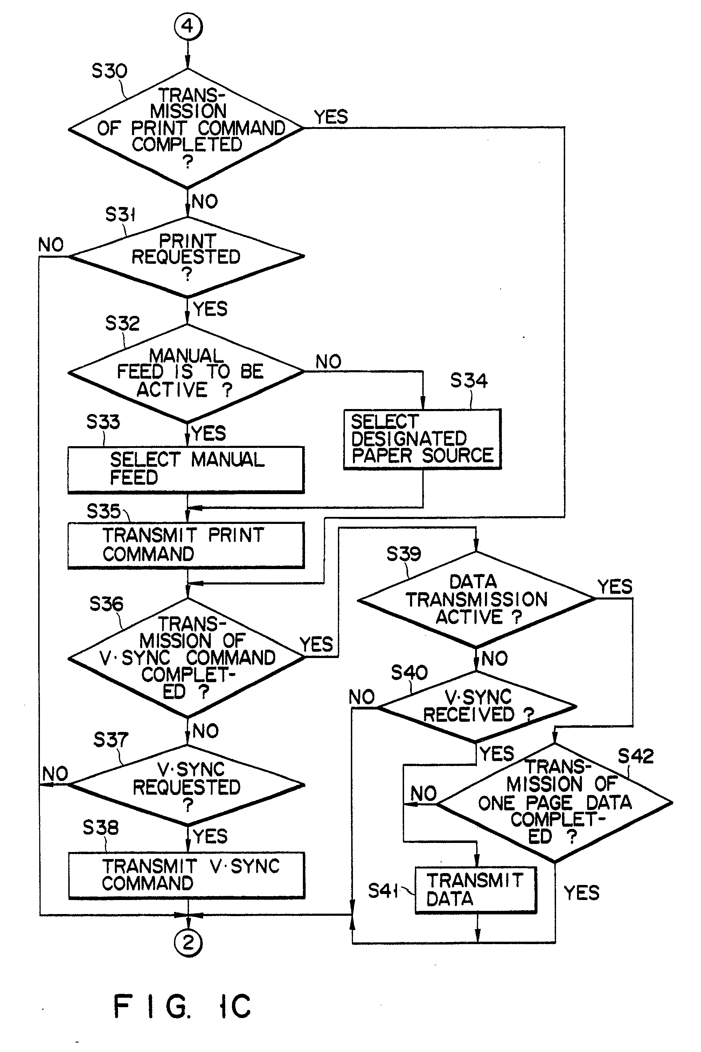

If, for example, the image formation apparatus is in an off-line state, and this state is determined by CPU 50 in Fig. 3 (NO in step S1 in Fig. 1A), it is checked whether a previous printing operation corresponding to reception data from host apparatus 58 is completed, i.e., previous reception data is currently processed (step S2 in Fig. 1B). If it is completed (data is not being processed), the flow branches to step S3 to check whether a power interruption mode is currently set. If NO in step S3, it is checked whether a power interruption input is input from switch 9c of operation panel 9 (step S4). If a power interruption input is input, the power interruption mode is set (step S5). Printer power supply 81 is then turned off (step S6), and the flow returns to step S1.

If NO in step S4, the flow returns to step S1.

If YES in step S3, the flow branches to step S7 to check whether a power resumption input is input from switch 9c of operation panel 9. If YES in step S7, the power interruption mode is canceled (step S8). Printer power supply 81 is then turned on (step S9), and the flow returns to step S1.

If NO in step S7, the flow branches to step S6 to turn off printer power supply 81.

The above description is associated with processing to be performed when printing corresponding to previous reception data from host apparatus 58 is completed. By repeatedly executing the processing in the steps after step S1, an idling state is set, and the flow is waited until the image forming apparatus is set in an on-line state.

If it is determined in step S2 in Fig. 1B that printing is not completed, the flow advances to step S10. It is then checked in the above-described manner whether a power interruption or resumption input is input in the above-described manner (steps S11, S12, or steps S13 and S14), and the flow advances to step S15 in Fig. 1A.

In the processing from step S2 to step S15, the printing processing corresponding to the previous reception data from host apparatus 58 is not completed. Therefore, printer power supply 81 is turned on in step S15, and the flow advances to step S16 to continue the printing processing (processing after step S16 will be described later).

If the image forming apparatus is set in an on-line state (YES in step S1 in Fig. 1A), it is checked whether data transmitted from host apparatus 58 is a command (step S17). If it is a command, CPU 50 executes an operation corresponding to the command (step S18). If it is not a command, the flow skips the command execution step and advances to step S19. The above-mentioned command defines the attribute of data to be supplied after the command or performs control of the printer without transmission/reception of data.

Subsequently, it is checked whether a page buffer arranged as a data reception buffer in RAM 52 is full (step S19). If it is not full, it is checked whether data transmitted from host apparatus 58 is image data (step S20).

If the data is not image data (NO in step S20), the flow advances to step S21. If the power interruption mode is not set (NO in step S21), printer power supply 81 is turned on (step S22). If the power interruption mode is set (YES in step S21), printer power supply 81 is turned off (step S23). The flow then returns to step S1.

CPU 50 waits for reception of a command or image data while repeatedly executing the above-described series of steps.

In such a state, if it is determined in step S20 that image data is received, the received image data is sequentially stored in the above-mentioned page buffer (step S24). Subsequently, it is checked whether storage of one-page data in the page buffer is completed (step S25). If it is not completed, flickering of a "data" lamp in LED display unit 9b of operation panel 9 is started (step S26). The flow then advances to step S22 to turn on printer power supply 81. The flow advances to step S1 to perform the series of steps. With this operation, the flow waits until one-page image data is stored in the page buffer. If it is determined that storage of the one-page image data is completed by repeatedly executing the series of steps (YES in step S25), the "data" lamp is turned off (step S27), and the data reception processing is completed. The flow then advances to the printing processing after step S15.

If it is determined in step S19 that the page buffer (52) is full, data reception is stopped (step S28). In this case, the flow also shifts to the printing processing after step S15.

In this embodiment, power interruption and cancellation can be designated through operation panel 9 in an off-line state. Assume that the printing processing is completed, the page buffer is not full in an on-line state, and image data is not being received. In this case, if the power interruption mode is set, printer power supply 81 is always turned off to reduce long-time power consumption. If the printing processing is not completed, printer power supply 81 is turned on with priority over other operations or continuously regardless of whether the power interruption mode is set. Therefore, a normal printing operation can be automatically restored.

During data reception, the "data" lamp is caused to flicker to inform this state to an operator. This prevents a situation that the operator cannot determine whether long-time illumination of the lamp indicates data transmission or a failure.

If storage of one-page image data in the page buffer (54) is completed, it is checked whether a scan buffer (54) arranged on video RAM 54 is full (step S16). If it is determined that the scan buffer is not full, CPU 50 converts image data of a character image stored in the page buffer into bit image data and stores it in video RAM 54 as a scan buffer (step S29).

If the scan buffer (54) is full, the flow skips step S29.

Subsequently, it is checked whether a print command is already transmitted (step S30 in Fig. 1C). If the command is already transmitted (YES in step S30), the flow skips the subsequent print command transmission processing (steps S31 to S35) and advances to step S36.

If the print command is not transmitted yet (NO in step S30), it is checked whether a print request is output from the printer (step S31). If it is determined that no print request is output (NO in step S31), it is determined that preparation of a printing operation of the printer is not completed. Consequently, the flow returns to step S1 in Fig. 1A to wait for output of a print request while executing the above-described series of steps again.

If it is determined that a print request is output (YES in step S31), it is checked whether paper P in Fig. 5 is fed from paper feed cassette 25 or manual insertion tray 13 (step S32). That is, it is checked whether paper P is detected by paper sensor 26 arranged on the bottom portion of manual insertion tray 13. If it is determined that paper P is detected (YES in step S32), manual insertion is determined. As a result, convey rollers 29a are driven (step S33) to guide paper P fed from manual insertion tray 13 to image transfer portion 23. If it is determined in step S32 that paper P is not detected by paper sensor 26 (NO in step S32), it is determined that paper P is fed from paper feed cassette 25. As a result, convey rollers 29b are driven (step S34) to guide paper fed from paper feed cassette 25 to image transfer portion 23.

When selection of a feed source of paper P is completed this manner, a print command is transmitted to the printer (step S35).

Subsequently, it is checked whether a VSYNC command is already transmitted (step S36). If it is determined that the VSYNC command is not transmitted (NO in step S36), it is checked whether a VSYNC request is output from the printer (step S37). If it is determined that the VSYNC request is not output (NO in step S37), the flow returns to step S1 and waits for the VSYNC request while executing the above-described series of steps. If it is determined that the VSYNC request is output (YES in step S37), the VSYNC command is output to the printer (step S38) to provide the start timing of formation of an electrostatic latent image by means of laser optical system 17. The flow returns to step S1 and waits for the HSYNC request.

In this state, if it is determined in step S36 that the VSYNC command is already transmitted (YES in step S36), it is checked whether data is being transmitted (step S39). If data is not being transmitted (NO in step S36), it is checked whether the HSYNC request is received (step S40). If no HSYNC request is received (NO in step S40), the flow returns to step S1 to wait for the HSYNC request while executing the series of steps. If it is determined that the HSYNC request is output in step S40 (YES in step S40), image data of a bit image stored in a scan buffer (54) is transmitted to printer circuits 47 and 49 in synchronism with a predetermined timing (step S41). With this operation, formation of an electrostatic latent image is started by laser optical system 17.

The flow returns to step S1 and CPU 50 waits for the end of transmission of one-page image data while executing the series of steps. Data transmission is continued until it is determined in step S39 that data transmission is being performed and in step S42 that transmission of one-page image data is completed. When transmission of one-page image data is completed in this manner, the flow returns to step S1. Printer control portion 48 is then restored to an initial state and is set in a state wherein it can transmit image data of the next page.

A plurality of images can be formed by repeatedly executing the above-described operations (steps S1 to S42).

Assume that power interruption is designated through the operation panel in the printer power supply of the above-described image forming processor. In this case, if reception of image data from the host apparatus is completed, and a printing operation is completed, supply of power from the printer power supply to the image forming processor is interrupted. This operation reduces wasteful power consumption in a period in which the printer is not used for a long time.

During reception of image data, power interruption is prevented by neglecting a power interruption command, thus preventing interruption of a printing operation.

In addition, during power interruption, supply of power to the image forming processor is resumed with priority over access to the host apparatus, i.e., an image data receiving operation. Therefore, the printer can be automatically restored to a printable state, thus providing excellent operability.

Furthermore, since a power interruption state can be easily canceled upon designation of resumption by means of the operation panel, excellent operability can be realized.

Moreover, in this embodiment, since supply of power to the image forming processor is controlled, great advantages can be obtained.

In this embodiment, supply of power to the image forming processor is controlled. However, the present invention is not limited to this. For example, supply of power to only the fixing unit which especially consumes a large amount of power may be controlled. With such control, great advantages can also be expected.

Various other changes and modifications can be made within the spirit and scope of the invention.

For example, the apparatus shown in Fig. 3 may be a personal computer to be connected to host apparatus 58 through a network. In this case, ON/OFF control of supply of power to peripheral units of each personal computer can be controlled by the present invention.

As has been described in detail above, according to the present invention, there is provided an image forming apparatus which can reduce the power consumption in accordance with a request from a user.

## Claims

1. A data processing apparatus which is connectable to an external unit (58) in an on-line state, characterized by comprising:
means (81) for supplying power for activating the data processing apparatus;
means (9) for inputting a power interruption command for interrupt the power supply;
first setting means (50) for setting said supplying means to a power-off state, when the external unit is not in the on-line state, the data processing apparatus is not performing data processing, and the power supply of said supplying means is not in a power interruption state while the power interruption command is input to the data processing apparatus by said inputting means; and

second setting means (50) for setting said supplying means to the power-off state, when the external unit is in the on-line state, the data processing apparatus is not receiving data from said external unit, and the power interruption command is input to the data processing apparatus by said inputting means.

2. An apparatus according to claim 1, characterized by further comprising an image forming means (80), responsive to image data from said external unit, for outputting an image corresponding to the image data; and means (50) for interrupting supply of power to said image forming portion in the power interruption state.

3. An apparatus according to claim 2, characterized by further comprising:

an IC card (65 to 67) detachably connected to the apparatus; and

means (62 to 64) for connecting said IC card to said image forming means.

4. An apparatus according to claim 2, characterized by further comprising means (50) for preventing interruption of an image forming operation of said image forming means based on the received image data, by neglecting the power interruption command during reception of the image data.

5. An apparatus according to claim 2, characterized by further comprising means (50), in the power interruption state, for resuming supply of power to said image forming means with priority over reception operation of the image data.

6. An apparatus according to claim 5, characterized by further comprising means (9d) for inputting the power interruption command to the apparatus.

7. An apparatus according to claim 5, characterized by further comprising means (9d) for inputting a power resumption command to the apparatus.

# F I G. 1A

EP 0 426 036 A2

FIG. 1B

EP 0 426 036 A2

EP 0 426 036 A2

F I G. IC

PRINTER

PRINTER CONTROLLER

① PRINT REQUEST

② PRINT COMMAND

③ V·SYNC REQUEST

④ V·SYNC COMMAND

⑤ H·SYNC REQUEST

⑥ DATA

F I G. 2

F I G. 3

F I G. 4

FIG. 5

| ON-LINE | READY | DATA | — 9 |
| OPERATOR | SERVICE | MODE | ← 9b |

┌─────────────────────────────────┐
│             DISPLAY             │ — 9a
└─────────────────────────────────┘

| NEXT ITEM | PRECED- ING ITEM | NEXT ITEM | PRECED- ING ITEM | ← 9c |

MENU        VALUE

| NUMERIC KEYPAD (10-KEY) | — 9b |

# F I G.  6

65 —
66 —
67 —

11   10a
10b
10c   48

# F I G.  7

F I G. 8